# EUROPÄISCHE PATENTSCHRIFT

(11) **EP 2 509 758 B1**
(45) Veröffentlichungstag und Bekanntmachung des Hinweises auf die Patenterteilung: **12.06.2019**
(21) Anmeldenummer: 10790901.2
(22) Anmeldetag: 08.12.2010
(51) Int. Cl.: B29B 9/06

(54) **GRANULIERVORRICHTUNG MIT EINER VORRICHTUNG ZUM VERBINDEN EINES MEHRTEILIGEN GEHÄUSES DER GRANULIERVORRICHTUNG**
GRANULATING DEVICE COMPRISING A DEVICE FOR CONNECTING A MULTI-PART HOUSING OF THE GRANULATING DEVICE
SYSTÈME DE GRANULATION MUNI D'UN DISPOSITIF PERMETTANT D'ASSEMBLER UN BOÎTIER EN PLUSIEURS PARTIES DUDIT SYSTÈME DE GRANULATION

(30) Priorität: 10.12.2009 DE 102009057781
(43) Veröffentlichungstag der Anmeldung: 17.10.2012
(73) Patentinhaber: Maag Automatik GmbH, 63762 Großostheim (DE)
(72) Erfinder: FIEBELER, Kai, 63762 Grossostheim (DE)
(74) Vertreter: Spranger, Stephan
(86) Internationale Anmeldenummer: PCT/EP2010/007468
(87) Internationale Veröffentlichungsnummer: WO 2011/069648

(56) Entgegenhaltungen:
- EP-A1- 2 008 784
- DE-A1- 1 809 470
- US-A- 3 632 279

## Beschreibung

Die Erfindung betrifft eine Granuliervorrichtung zum Herstellen von Granulatkömem aus einem Kunststoffmaterial, insbesondere aus thermoplastischem Kunststoffmaterial, mit einer Düsenplatte, einem an die Düsenplatte angrenzenden Schneidkammergehäuse, einer Schneideinrichtung mit zumindest einem Messer, angetrieben über eine Messerwelle von einer Messerantriebseinrichtung, angeordnet in einem Messerantriebsgehäuse, wobei das Schneidkammergehäuse einen Schneidkammergehäuse-Flanschabschnitt und das Messerantriebsgehäuse einen Messerantriebsgehäuse-Flanschabschnitt aufweisen und dort über ein Verbindungselement miteinander verbindbar sind, gemäß dem Oberbegriff des Anspruchs 1.

Generell werden zur Granulierung von thermoplastischem Kunststoffmaterial, wie z.B. Polyethylen oder Polypropylen, häufig Granuliervorrichtungen mit Extrudern eingesetzt, bei welchen das geschmolzene Kunststoffmaterial durch eine Düsenplatte mit Düsenöffnungen in ein Kühlfluid, beispielsweise Wasser, gepresst wird und von der Schneideinrichtung, deren zumindest ein Messer die Öffnungen der Düsenplatte überstreicht, dort abgetrennt wird, so dass Granulatkörner gebildet werden. Entsprechende Vorrichtungen, welche beispielsweise Verfahren zur Unterwassergranulierung ausführen, sind als Unterwassergranulieranlagen z.B. unter der Produktbezeichnung SPHERO- vom Unternehmen Automatik Plastics Machinery GmbH bekannt.

Bei solchen Granuliervorrichtungen ist beispielsweise zum Austausch von Messern bei auftretendem Messerverschleiß das Messerantriebsgehäuse separat trennbar vom eigentlichen Schneidkammergehäuse vorgesehen. Beim Anbringen des Messerantriebsgehäuses an dem Schneidkammergehäuse ist insbesondere darauf zu achten, dass dabei eine exakte Positionierung der Gehäuseteile zueinander erfolgt, so dass sich die entsprechende Schneidgeometrie möglichst genau und reproduzierbar ergibt und die Gehäuseteile fluiddicht miteinander verbunden sind. Außerdem sollte sichergestellt sein, dass der Betrieb der Granuliervorrichtung erst erfolgt, wenn das Messerantriebsgehäuse sicher und dicht mit dem Schneidkammergehäuse verbunden ist. Ähnlich sollte bei der Trennung von Schneidkammergehäuse und Messerantriebsgehäuse darauf geachtet werden, dass diese nicht getrennt werden, während beispielsweise die Schneideinrichtung noch im Betrieb ist und sich das zumindest eine Messer noch dreht, was eine hohe Verletzungsgefahr für eine Bedienperson bedeuten würde.

Die deutsche Offenlegungsschrift DE 195 02 587 A1 beschreibt ein Verfahren zum Verriegeln einer Granuliervorrichtung an einem Extruder und eine entsprechende Verriegelungsvorrichtung, wobei umfänglich mehrere automatisch arbeitende Betätigungsvorrichtungen zum gleichzeitigen Verriegeln vorgesehen sind. Dies soll den Vorgang des Andockens vereinfachen und eine gleichmäßige Verspannung zwischen der Granuliervorrichtung und dem dortigen Extruder gewährleisten.

Die deutsche Patentschrift DE 41 16 933 C2 beschreibt eine Granuliervomchtung für thermoplastische Kunststoffmassen, wobei ein Gehäuse der dortigen Granuliervorrichtung und die dortige Antriebsvorrichtung in mit dem Granulierkopf verbundenen Holmen geführt sind, deren horizontale Verankerung über eine Stütze erfolgt. Zum Verriegeln sind Verbindungselemente im Umfangsbereich der Holme angeordnet und mit diesen jeweils verriegelbar.

Das Dokument EP 2008 784 A1 beschreibt eine Vorrichtung zur Unterwassergranulierung, gemäß dem Oberbegriff des Anspruchs 1, wobei die Motoreinheit und das Schneidkammergehäuse dort über Flanschabschnitte miteinander anliegen und einer lösbaren Klemmmanschette verbunden werden können.

Das US-Patent US 3 632 279 beschreibt die Klemmung einer Lochplatte an einem Extruder mittels einer Klemmmanschette mit Exzenter-Verschlusselement. Eine Öffnung zusammenwirkend mit einem Passnocken kann dort zur Vermeidung ungewollten Öffnens dienen.

Es ist somit die Aufgabe der vorliegenden Erfindung, eine Granuliervorrichtung vorzusehen, welche die geschilderten Nachteile des Standes der Technik überwindet, und insbesondere eine solche Granuliervorrichtung vorzusehen, bei welcher das Schneidkammergehäuse und das Messerantriebsgehäuse einfach, insbesondere von einer einzelnen Bedienperson, reproduzierbar und exakt miteinander verbunden werden können, wobei gleichzeitig sichergestellt werden soll, dass ein Verletzungsrisiko aufgrund eines noch oder schon laufenden Messerantriebs bei noch nicht zusammengesetzten Gehäuseteilen vermieden werden soll.

Diese Aufgabe wird erfindungsgemäß gelöst mit einer Granuliervorrichtung mit den Merkmalen gemäß Anspruch 1. Bevorzugte Ausführungsformen der Erfindung sind in den abhängigen Ansprüchen definiert.

Die erfindungsgemäße Granuliervorrichtung zum Herstellen von Granulatkömem aus einem Kunststoffmaterial, insbesondere aus einem thermoplastischen Kunststoffmaterial, weist auf eine Düsenplatte, ein an die Düsenplatte angrenzendes Schneidkammergehäuse, eine Schneideinrichtung mit zumindest einem Messer, angetrieben über eine Messerwelle von einer Messerantriebseinrichtung, angeordnet in einem Messerantriebsgehäuse, wobei das Schneidkammergehäuse einen Schneidkammergehäuse-Flanschabschnitt und das Messerantriebsgehäuse einen Messerantriebsgehäuse-Flanschabschnitt aufweist und die Gehäuseteile dort über ein Verbindungselement miteinander verbindbar sind. Erfindungsgemäß weist das Verbindungselement eine Klemmmanschette, so angeordnet, dass diese zumindest einen Abschnitt der Flanschabschnitte umschließt, und ein Exzenter-Verschlusselement auf, wobei das Exzenter-Verschlusselement mit jeweiligen Abschnitten der Klemmmanschette verbunden ist und wobei das Exzenter-Verschlusselement zumindest eine Indexöffnung aufweist, welche in einer Verschluss-Position mit einem Passnocken fluchtend angeordnet ist, welcher dort dann durch die Indexöffnung durchtritt. Die jeweiligen Abschnitte, an denen das Exzenter-Verschlusselement mit der Klemmmanschette verbunden ist, können sich bevorzugt an den jeweiligen Endbereichen der Klemmmanschette befinden. Die Klemmmanschette kann dabei zweckmäßig mehrteilig ausgeführt sein, z.B. in Form zweier oder mehrerer Schellen, welche die Flanschabschnitte zumindest abschnittsweise umschließen. Generell kann die Klemmmanschette auch den gesamten Umfang oder im Wesentlichen den gesamten Umfang im Bereich der Flanschabschnitte umschließen. In der Verschluss-Position kann der Passnocken, welcher dabei in der Indexöffnung fluchtend angeordnet ist, so gestaltet sein, dass er entweder in der Indexöffnung noch etwas Spiel aufweist oder aber so gestaltet ist, dass er satt an der Innenwandung der Indexöffnung anliegt. Die Indexöffnung und/oder der Passnocken können dabei einen runden Querschnitt aufweisen. Es ist auch möglich, dass Passnocken und Indexöffnung unterschiedliche Querschnitte aufweisen, wobei dann jedoch darauf zu achten ist, dass der Passnocken in die Indexöffnung fluchtend passt. Passnocken und Indexöffnung können auch zueinander passend beispielsweise eine konische Form und/oder einen z.B. dreieckigen Querschnitt aufweisen, was die Zentrierung des Passnockens in der Indexöffnung weiter verbessern kann. Das Verschlusselement kann bevorzugt so angeordnet sein, dass es in der Längserstreckung, d. h. in Richtung seiner Verschlussrichtung (Klemmung), sich in Umfangsrichtung der Klemmmanschette und/oder in Umfangsrichtung der Flanschabschnitte der Gehäuseteile der erfindungsgemäßen Granuliereinrichtung erstreckt. Es können bevorzugt auch mehrere Indexöffnungen mit jeweiligen mehreren, jeweils fluchtend dazu angeordneten Passnocken vorgesehen sein. Dadurch kann die Positionierung und abdichtende Verbindung der einzelnen Gehäuseteile besonders zuverlässig erfolgen.

Mit der Granuliervorrichtung mit der erfindungsgemäßen Klemmmanschette und dem erfindungsgemäßen Verschlusselement mit der Indexöffnung und dem Passnocken kann auf konstruktiv relativ einfache Art und Weise eine sichere und zuverlässige exakt reproduzierbare Verbindung zwischen verschiedenen Gehäuseteilen vorgenommen werden. Das Zusammenwirken von Passnocken und Indexöffnung in der Verschluss-Position erlaubt den sicheren Betrieb der so erfindungsgemäß gestalteten Granuliervorrichtung insbesondere auch bei Einhandbedienung durch eine Bedienperson.

Bei der erfindungsgemäßen Granuliervorrichtung ist der Passnocken in der Verschluss-Position über einen Abgriff den Betrieb der Messerantriebseinrichtung freigegeben. Das heißt, dass der Abgriff eine Positionsüberwachungsvorrichtung ist bzw. enthält und/oder eine Steuerungseinrichtung entsprechend ansteuert, wobei mittels einer Initiatorvorrichtung, z. B. eines Aktuators, welcher elektrisch, pneumatisch oder hydraulisch betätigt sein kann, beim Trennen der Messerantriebseinrichtung mit dem Messerantriebsgehäuse von dem Schneidkammergehäuse sichergestellt sein kann, dass diese Trennung nur bei stehender Messerantriebseinrichtung erfolgen kann. Auch kann so sichergestellt werden, dass die Messerantriebseinrichtung nur dann z.B. über die entsprechend vorgesehene und angesteuerte Steuerungseinrichtung gestartet werden kann, wenn das Messerantriebsgehäuse mit dem Schneidkammergehäuse über die erfindungsgemäße Klemmmanschette und das erfindungsgemäße Exzenter-Verschlusselement in der Verschluss-Position dicht und sicher verbunden ist.

Bevorzugt ist eine Ausführungsform der erfindungsgemäßen Granuliervorrichtung, bei welcher der Passnocken in axialer Richtung der Gehäuseteile verschiebbar ist zwischen einer Öffnungs-Position, in welcher die Gehäuseteile getrennt werden können, und der Verschluss-Position, in welcher der Passnocken, wie oben erläutert, erfindungsgemäß durch die Indexöffnung durchtritt und so die Verschluss-Position des Exzenter-Verschlusselements fixiert.

Besonders konstruktiv einfach ist eine Gestaltung der erfindungsgemäßen Granuliervorrichtung, bei welcher der Passnocken von Hand verschiebbar ist.

Bevorzugt ist eine Ausführungsform der erfindungsgemäßen Granuliervorrichtung, bei welcher der Passnocken z. B. automatisch mittels einer Passnocken-Betätigungsvorrichtung verschiebbar ist, wobei die Passnocken-Betätigungsvorrichtung bevorzugt pneumatisch, hydraulisch oder elektrisch betreibbar sein kann. So können die Zentrier-, Überwachungs- oder Betätigungsfunktionen, wie sie oben beschrieben sind, automatisiert besonders einfach erfolgen.

Gemäß einer bevorzugten Ausführungsform der erfindungsgemäßen Granuliervorrichtung kann das Exzenter-Verschlusselement als Kniehebel ausgebildet sein. Dabei kann das so gestaltete Exzenter-Verschlusselement im Wesentlichen in der Richtung der im Bereich der Flanschabschnitte umlaufenden Klemmmanschette sich erstrecken und dabei jeweils bevorzugt an den Enden der Klemmmanschette über Drehbolzen angebracht sein.

Bevorzugt kann das Exzenter-Verschlusselement scheibenförmig ausgebildet sein und einen daran angebrachten Bedienhebel aufweisen, wobei in dem scheibenförmigen Exzenter-Verschlusselement zumindest eine Exzenter-Kurve vorgesehen ist, in welcher zumindest ein an einem Abschnitt der Klemmmanschette angebrachter Führungsnocken geführt ist, welcher dort auch die Verbindung zwischen dem entsprechenden Abschnitt der Klemmmanschette und dem Exzenter-Verschlusselement bildet. Das scheibenförmig ausgebildete Exzenter-Verschlusselement ist dabei entsprechend um eine Drehachse drehbar. Bevorzugt bilden also die zumindest eine Exzenter-Kurve und der zumindest eine darin geführte Führungsnocken eine Art Kulissenführung.

Weiter bevorzugt kann in der zumindest einen Exzenter-Kurve ein an einem ersten Abschnitt, bevorzugt an einem ersten Ende, der Klemmmanschette angebrachter erster Führungsnocken geführt sein, welcher dort auch die Verbindung zwischen dem entsprechenden ersten Abschnitt der Klemmmanschette und dem Exzenter-Verschlusselement bildet, und es kann an einem zweiten Abschnitt der Klemmmanschette und an dem Exzenter-Verschlusselement ein Drehbolzen angebracht sein, welcher eine Drehverbindung zwischen dem entsprechenden zweiten Abschnitt der Klemmmanschette und dem Exzenter-Verschlusselement bildet. Die einzelne Exzenter-Kurve und der darin geführte einzelne Führungsnocken bilden so also eine Art einzelne Kulissenführung.

Des Weiteren bevorzugt ist eine Ausführungsform der erfindungsgemäßen Granuliervorrichtung, bei welcher in dem Exzenter-Verschlusselement eine erste Exzenter-Kurve vorgesehen ist, in welcher ein an einem ersten Abschnitt, bevorzugt an einem ersten Ende, der Klemmmanschette angebrachter erster Führungsnocken geführt ist, welcher dort auch die Verbindung zwischen dem entsprechenden ersten Abschnitt der Klemmmanschette und dem Exzenter-Verschlusselement bildet, und eine zweite Exzenter-Kurve in dem Exzenter-Verschlusselement vorgesehen ist, in welcher ein an einem zweiten Abschnitt, bevorzugt einem zweiten Ende, der Klemmmanschette angebrachter zweiter Führungsnocken geführt ist, welcher dort auch die Verbindung zwischen dem entsprechenden zweiten Abschnitt der Klemmmanschette und dem Exzenter-Verschlusselement bildet. Die beiden Exzenter-Kurven und die jeweils darin geführten Führungsnocken bilden so also eine Art doppelte Kulissenführung.

Besonders flexibel ist eine Klemmmanschettengestaltung, welche eine erste Schellenhälfte, eine zweite Schellenhälfte und eine Schellenverbindung aufweist, an welcher die erste Schellenhälfte und die zweite Schellenhälfte über Schellendrehbolzen jeweils drehbar angebracht sind. Die so gestaltete Klemmmanschette kann bevorzugt den gesamten Umfang im Bereich der Flanschabschnitte umschließen, wobei beispielsweise der Bereich, in welchem das Exzenter-Verschlusselement sich befindet, nicht umschlossen wird. Es ist aber auch möglich, dass auch dieser Bereich durch entsprechende Verlängerung der ersten Schellenhälfte und/oder der zweiten Schellenhälfte auch von der so bevorzugt gestalteten Klemmmanschette umgeben sein kann. Auf diese Weise kann eine besonders zuverlässige Verbindung und Klemmung der Gehäuseteile erreicht werden.

Die Verbindung der Gehäuseteile der erfindungsgemäßen Granuliervorrichtung kann noch dadurch weiter verbessert werden, dass die Klemmmanschette eine an der ersten Schellenhälfte mittels eines Befestigungsbolzens schwenkbar angebrachte erste Spannbacke und eine an der zweiten Schellenhälfte mittels eines Befestigungsbolzens schwenkbar angebrachte zweite Spannbacke aufweist. Die Klemmung und dichte Verbindung der Gehäuseteile wird dadurch besonders zuverlässig gewährleistet, da dadurch ein mögliches Verkanten der Klemmmanschette zuverlässig verhindert wird und eine über den Umfang gleichmäßige Kraftbeaufschlagung auf die Verbindung der Gehäuseteile im Bereich der Flanschabschnitte erreicht werden kann.

Erfindungsgemäß ist also das Exzenter-Verschlusselement an zwei Stellen an der Klemmmanschette drehbar gelagert befestigt, bevorzugt z.B. in Form eines Kniehebels. Auch kann ein Führungsnocken, wie beschrieben, der an einem Abschnitt der Klemmmanschette angebracht sein kann, durch zumindest eine Exzenter-Kurve eines entsprechend gestalteten scheibenförmigen Exzenter-Verschlusselements durchtauchen. Es können auch zwei Exzenter-Kurven vorgesehen sein, welche jeweils über eigene Führungsnocken, welche dort laufen können, mit den jeweiligen Abschnitten der Klemmmanschette verbunden sind. Wird nun das Exzenter-Verschlusselement geschwenkt, öffnet oder schließt sich die Klemmmanschette entsprechend. Das erfindungsgemäße Verbindungselement bzw. das Exzenter-Verschlusselement oder die Klemmmanschette kann dabei an einem zusätzlichen Adapter oder einer Befestigungsplatte angebracht sein, welche(r) wiederum an die erfindungsgemäße Granuliervorrichtung angebracht sein kann, bevorzugt an ein Gehäuseteil einer solchen Granuliervorrichtung angebracht sein kann.

Nur wenn die erfindungsgemäße Klemmmanschette über das erfindungsgemäße Verschlusselement mit dem Passnocken fluchtend in der Indexöffnung in einer Verschluss-Position geschlossen ist, ist das Verbindungselement der Granuliervorrichtung sicher verriegelt. Über den zusätzlich vorgesehenen Abgriff, welcher als entsprechendes Gegenstück beispielsweise am Schneidkammergehäuse montiert sein kann, kann diese Verschluss-Position abgefragt sein und sichergestellt werden, dass erst dann der Betrieb der Messerantriebseinrichtung freigegeben wird.

Die Erfindung wird im Folgenden anhand der beispielhaft erläuterten Ausführungsformen näher beschrieben. In den Figuren zeigt:
- Fig. 1a: eine schematische perspektivische Ansicht eines Verbindungselements einer Granuliervorrichtung gemäß einer ersten bevorzugten Ausführungsform der Erfindung in einer Verschluss-Position;
- Fig. 1b: eine schematische perspektivische Ansicht eines Verbindungselements einer Granuliervorrichtung gemäß einer ersten bevorzugten Ausführungsform der Erfindung in einer Öffnungs-Position;
- Fig. 2a: eine schematische perspektivische Ansicht eines Verbindungselements einer Granuliervorrichtung gemäß einer zweiten bevorzugten Ausführungsform der Erfindung in einer Verschluss-Position;
- Fig. 2b: eine schematische perspektivische Ansicht eines Verbindungselements einer Granuliervorrichtung gemäß einer zweiten bevorzugten Ausführungsform der Erfindung in einer Öffnungs-Position;
- Fig. 3a: eine schematische perspektivische Ansicht eines Verbindungselements einer Granuliervorrichtung gemäß einer dritten bevorzugten Ausführungsform der Erfindung in einer Verschluss-Position;
- Fig. 3b: eine schematische perspektivische Ansicht eines Verbindungselements einer Granuliervorrichtung gemäß einer dritten bevorzugten Ausführungsform der Erfindung in einer Öffnungs-Position; und
- Fig. 4: eine schematische Schnittansicht eines Teils einer Granuliervorrichtung mit einem Verbindungselement gemäß der Erfindung in einer Verschluss-Position.

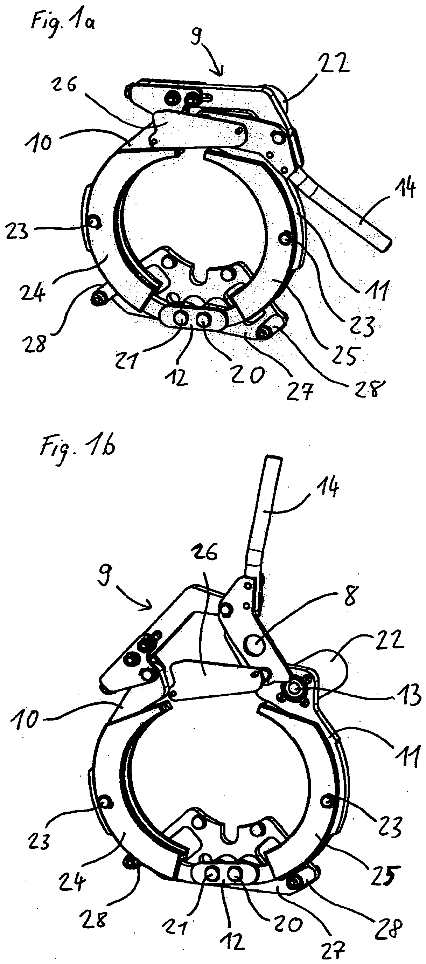

Die Fig. 1a zeigt eine schematische perspektivische Ansicht eines Verbindungselements einer Granuliervorrichtung gemäß einer ersten bevorzugten Ausführungsform der Erfindung in einer Verschluss-Position.

Das erfindungsgemäße Verbindungselement verbindet ein Schneidkammergehäuse mit einem Schneidkammergehäuse-Flanschabschnitt und ein Messerantriebsgehäuse mit einem Messerantriebsgehäuse-Flanschabschnitt zum Herstellen von Granulatkörnern aus einem Kunststoffmaterial im Bereich der Flanschabschnitte miteinander. Das Verbindungselement weist eine dreiteilige Klemmmanschette mit einer ersten Schellenhälfte 10, einer zweiten Schellenhälfte 11 und einer Schellenverbindung 12 auf, an welcher die erste Schellenhälfte 10 mit einem ersten Schellendrehbolzen 21 und die zweite Schellenhälfte 11 mit einem zweiten Schellendrehbolzen 20 jeweils drehbar angebracht sind. Die Klemmmanschette weist außerdem gemäß der Ausführungsform der Fig. 1a eine an der ersten Schellenhälfte 10 mittels eines Befestigungsbolzens 23 schwenkbar angebrachte erste Spannbacke 24 und eine an der zweiten Schellenhälfte 11 mittels eines Befestigungsbolzens 23 schwenkbar angebrachte zweite Spannbacke 25 auf. Das erfindungsgemäße Verbindungselement weist außerdem eine Befestigungsplatte 27 auf, welche in der Art eines Adapters die Anbringung und Fixierung des erfindungsgemäßen Verbindungselements bevorzugt an beispielsweise dem Messerantriebsgehäuse bzw. dem Messerantriebsgehäuse-Flanschabschnitt der erfindungsgemäßen Granuliervorrichtung dort ermöglichen kann. Die Befestigungsplatte 27 weist zweckmäßig Anschläge 28 auf, welche die Schwenkbewegung der beiden Schellenhälften 10 und 11 bzw. der ersten Spannbacke 24 und der zweiten Spannbacke 25 in eine Öffnungs-Position des erfindungsgemäßen Verbindungselements begrenzen.

Die Klemmmanschette mit der ersten Schellenhälfte 10, der zweiten Schellenhälfte 11, der Schellenverbindung 12 und der ersten Spannbacke 24 sowie der zweiten Spannbacke 25 ist so erfindungsgemäß gestaltet, dass zumindest ein Abschnitt der Flanschabschnitte der Gehäuseteile der erfindungsgemäßen Granuliervorrichtung umschlossen ist. In der Darstellung der Fig. 1a ergibt sich im Wesentlichen eine Umschließung um beinahe den gesamten Umfang der entsprechenden Flanschabschnitte.

Beim erfindungsgemäßen Verbindungselement ist außerdem ein Exzenter-Verschlusselement 9 vorgesehen, welches mit jeweiligen Abschnitten der Klemmmanschette verbunden ist, nämlich auf der einen Seite mit der ersten Schellenhälfte 10 und auf der anderen Seite mit der zweiten Schellenhälfte 11. In der in der Fig. 1a gezeigten bevorzugten Ausführungsform der Erfindung handelt es sich bei dem Exzener-Verschlußelement 9 um einen über einen Bedienhebel 14 betätigbaren Kniehebel. Die Verbindung unter den einzelnen Elementen erfolgt dabei über Drehbolzen.

In der Darstellung der Verschluss-Position gemäß Fig. 1a durch eine Initiatorplatte 26 (Beschreibung weiter unten) verdeckt und somit dort nicht zu sehen, aber in der entsprechenden Darstellung der Fig. 1b in einer Öffnungs-Position zu erkennen, ist, dass das Exzenter-Verschlusselement 9 eine Indexöffnung 8 aufweist, welche in der in Fig. 1a gezeigten Verschluss-Position des erfindungsgemäßen Verbindungselements mit einem Passnocken 13 fluchtend angeordnet ist, welcher dort in der Verschluss-Position durch die Indexöffnung 8 durchtritt (in der Darstellung der Fig. 1a, wie gesagt, verdeckt und daher nicht zu sehen). Der Passnocken 13 kann von Hand verschiebbar sein. In der in Fig. 1a gezeigten Ausführungsform ist zusätzlich eine Passnockenbetätigungsvorrichtung 22 vorgesehen, mittels welcher der Passnocken 13 entsprechend verschiebbar ist, wobei die Passnockenbetätigungsvorrichtung 22 entweder pneumatisch, hydraulisch oder elektrisch betreibbar sein kann, was die Automatisierung des Betätigungsvorgangs des Passnockens 13 ermöglicht.

Über einen Abgriff, welcher beispielsweise im Bereich der Passnockenbetätigungsvorrichtung 22 vorgesehen sein kann, wird der Betrieb einer Messerantriebseinrichtung der Granuliervorrichtung mit dem erfindungsgemäßen Verbindungselement in der Verschluss-Position freigegeben. Eine zusätzlich vorgesehene Initiatorplatte 26 ist in der Verschluss-Position des Passnockens 8 in Verbindung mit diesem Passnocken 8, wodurch ein elektrischer Kontakt geschlossen sein kann, welcher so als zusätzliches Signal dient, dass die Verriegelung in die Verschluss-Position des erfindungsgemäßen Verbindungselements korrekt erfolgt ist. Dies kann als Signal für die Freigabe des Betriebs der Messerantriebseinrichtung entsprechend mit genutzt werden, um die Sicherheit des Betriebs der so ausgestalteten erfindungsgemäßen Granuliervorrichtung weiter zu erhöhen.

Gemäß der in Fig. 1a gezeigten bevorzugten Ausführungsform der Erfindung mit dem erfindungsgemäßen Exzenter-Verschlusselement 9 ausgebildet als einfachen Kniehebel, welcher in seiner Klemmfunktion in Umfangsrichtung des Verbindungselements wirkt, ist das Verbindungselement über den Bedienhebel 14 einfach durch eine Person zu bedienen.

Generell erlaubt die erfindungsgemäße Vorrichtung eine einfache Verbindung von den Gehäuseteilen der entsprechenden Granuliervorrichtung. Dies kann dabei mit der erfindungsgemäßen Vorrichtung durch eine Bedienperson einhändig vorgenommen werden. Es ist nicht erforderlich, dass die Bedienperson beispielsweise mühsam erst eine Klemmhalterung anlegen muss, welche dann, während diese noch gehalten werden muss, an mehreren Stellen geschlossen werden muss. Auch durch die Befestigungsplatte 27 mit ihren Anschlägen 28 ist es bei Trennung der Gehäuseteile nicht erforderlich, dass beispielsweise beim Auseinanderziehen von Gehäuseteilen das Verbindungselement separat gehalten werden muss.

Die Fig. 1b zeigt eine schematische perspektivische Ansicht eines Verbindungselements einer Granuliervorrichtung gemäß der ersten bevorzugten Ausführungsform der Erfindung in einer Öffnungs-Position.

In den Figuren entsprechen generell gleiche Bezugszeichen gleichen Elementen der Erfindung. Soweit nicht anders angegeben, gelten die entsprechenden Ausführungen zu einzelnen Figuren auch zu den jeweiligen übrigen Figuren.

In der Darstellung gemäß Fig. 1b ist die Klemmmanschette des erfindungsgemäßen Verbindungselements in der Öffnungs-Position des als Kniehebel ausgebildeten Exzenter-Verschlusselements 9 dargestellt. In dieser Darstellung ist besonders gut die Indexöffnung 8 zu erkennen, wobei in der gezeigten Öffnungs-Position der Passnocken 13 axial nach hinten verschiebbar zurückgezogen ist und nicht durch die Indexöffnung 8 durchtritt. Auch zu sehen ist, dass der Passnocken 13 in dieser Öffnungs-Position nicht in Verbindung zu der Initiatorplatte 26 steht. Somit ist auch kein entsprechender Signalkontakt gegeben. Es gibt also in dieser Öffnungs-Position auch kein entsprechendes Signal, welches z.B. den Betrieb der Messerantriebseinrichtung freigeben würde. Somit ist eine sichere und zuverlässige Abschaltung der Messerantriebseinrichtung erfindungsgemäß besonders einfach ermöglicht.

Wie in Fig. 1b gut zu erkennen, dienen die Anschläge 28 als Begrenzungen für die Schwenkbewegung der beiden Schellenhälften 10 und 11 bzw. der beiden Spannbacken 24 und 25 der erfindungsgemäß vorgesehenen Klemmmanschette.

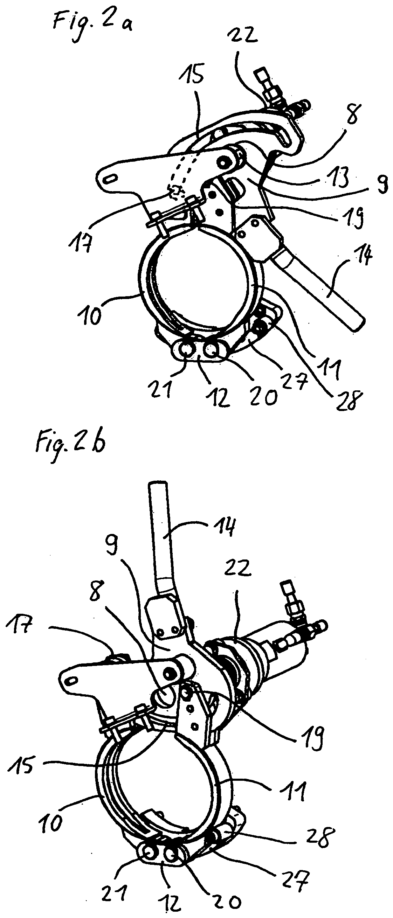

Die Fig. 2a zeigt eine schematische perspektivische Ansicht eines Verbindungselements einer Granuliervorrichtung gemäß einer zweiten bevorzugten Ausführungsform der Erfindung in einer Verschluss-Position.

Die erfindungsgemäße Vorrichtung gemäß der Darstellung der Fig. 2a unterscheidet sich von der erfindungsgemäßen Vorrichtung der Fig. 1a und 1b dadurch, dass das Exzenter-Verschlusselement 9 nicht als Kniehebel ausgebildet ist, sondern dass das Exzenter-Verschlusselement 9 scheibenförmig ausgebildet ist und den daran angebrachten Bedienhebel 14 aufweist, wobei in dem scheibenförmigen Exzenter-Verschlusselement 9 gemäß der Ausführungsform der Fig. 2a eine Exzenter-Kurve 15 vorgesehen ist, in welcher ein an der ersten Schellenhälfte 10 der Klemmmanschette angebrachter Führungsnocken 17 geführt ist, welcher dort die Verbindung zwischen dem entsprechenden Abschnitt, nämlich der ersten Schellenhälfte 10, der Klemmmanschette und dem scheibenförmig ausgebildeten Exzenter-Verschlusselement 9 bildet. An dem zweiten Abschnitt der Klemmmanschette, nämlich an der zweiten Schellenhälfte 11 davon, ist gemäß der in Fig. 2a gezeigten Ausführungsform ein Drehbolzen 19 angebracht, welcher auch an dem scheibenförmigen Exzenter-Verschlusselement 9 angebracht ist und so eine Drehverbindung zwischen dem entsprechenden zweiten Abschnitt bzw. der zweiten Schellenhälfte 11 der Klemmmanschette und dem scheibenförmigen Exzenter-Verschlusselement 9 bildet. Im Gegensatz zur Darstellung der ersten bevorzugten Ausführungsform in den Fig. 1a und 1b ist bei der in der Fig. 2a gezeigten zweiten bevorzugten Ausführungsform der Erfindung keine erste und zweite Spannbacke vorgesehen (was allerdings auch hier möglich wäre). Die Klemmmanschette ist besonders einfach nur mit einer ersten Schellenhälfte 10, einer zweiten Schellenhälfte 11 und einer Schellenverbindung 12, jeweils verbunden über Schellendrehbolzen 20, 21, ausgeführt. Das scheibenförmige Exzenter-Verschlusselement 9 gemäß der in Fig. 2a gezeigten zweiten bevorzugten Ausführungsform ist drehbar um eine Drehachse, hier den Drehbolzen 19, und im Wesentlichen in der Ebene bzw. parallel zur Ebene des Umfangs des Verbindungselements bzw. der Klemmmanschette orientiert.

Auch die in Fig. 2a gezeigte Ausführung des Exzenter-Verschlusselements in Scheibenform mit einer Exzenter-Kurve 15 erlaubt die Einhandbedienung durch eine einzelne Bedienperson.

Auch bei der in Fig. 2a gezeigten zweiten bevorzugten Ausführungsform weist das Exzenter-Verschlusselement 9 eine Indexöffnung 8 auf, welche in der dort gezeigten Verschluss-Position mit einem Passnocken 13 fluchtend angeordnet ist, welcher dort durch die Indexöffnung 8 durchtritt, wobei über einen Abgriff (in der Figur nicht zu sehen) der Betrieb einer Messerantriebseinrichtung der so gestalteten Granuliervorrichtung freigegeben wird. Eine Initiatorplatte, wie sie in der ersten bevorzugten Ausführungsform gemäß den Fig. 1a und 1b gezeigt ist, ist in der Ausführungsform der Fig. 2a nicht vorgesehen, könnte jedoch auch dort zusätzlich entsprechend angeordnet sein.

Die Fig. 2b zeigt eine schematische perspektivische Ansicht eines Verbindungselements einer Granuliervorrichtung gemäß der zweiten bevorzugten Ausführungsform der Erfindung in einer Öffnungs-Position. In der in Fig. 2b gezeigten Öffnungs-Position ist zu sehen, dass der Passnocken 13 dabei nicht durch die in die Öffnungs-Position verschwenkte Indexöffnung 8 in dem Exzenter-Verschlusselement 9 durchtritt. Somit wird der Betrieb der Messerantriebseinrichtung dabei nicht freigegeben, und ein sicheres Hantieren mit der Messerantriebseinrichtung ist ohne Verletzungsgefahr für die Bedienperson möglich.

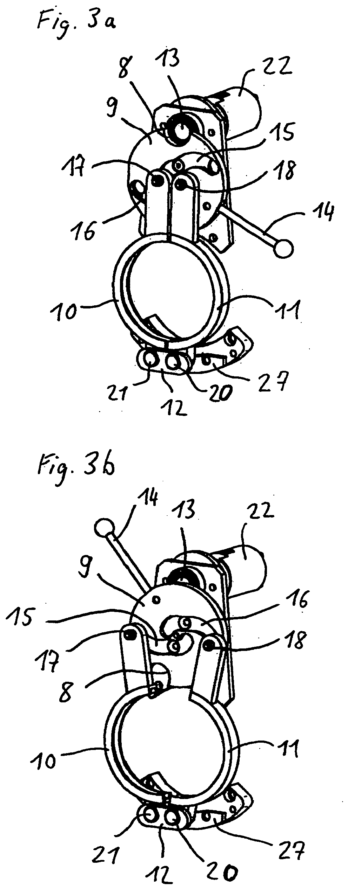

Die Fig. 3a zeigt eine schematische perspektivische Ansicht eines Verbindungselements einer Granuliervorrichtung gemäß einer dritten bevorzugten Ausführungsform der Erfindung in einer Verschluss-Position.

Die Ausführungsform gemäß der Fig. 3a unterscheidet sich von der Ausführungsform der Fig. 2a und 2b im Wesentlichen dadurch, dass in dem scheibenförmig ausgebildeten Exzenter-Verschlusselement 9 eine erste Exzenter-Kurve 15 vorgesehen ist, in welcher ein an einem ersten Abschnitt der Klemmmanschette, d. h. an der ersten Schellenhälfte 10 davon, angebrachter erster Führungsnocken 17 geführt ist, welcher dort auch die Verbindung zwischen dem entsprechenden ersten Abschnitt der Klemmmanschette und dem scheibenförmigen Exzenter-Verschlusselement 9 bildet. Gemäß der dritten bevorzugten Ausführungsform gemäß der Darstellung der Fig. 3a ist außerdem in dem scheibenförmigen Exzenter-Verschlusselement 9 eine zweite Exzenter-Kurve 16 vorgesehen, in welcher ein an dem zweiten Abschnitt der Klemmmanschette, d. h. an der zweiten Schellenhälfte 11, angebrachter zweiter Führungsnocken 18 geführt ist, welcher auch dort die Verbindung zwischen dem entsprechenden zweiten Abschnitt der Klemmmanschette und dem scheibenförmigen Exzenter-Verschlusselement 9 bildet. Die sonstigen Elemente der Erfindung sind in der Fig. 3a entsprechend wie auch in den sonstigen Figuren vorhanden. Ein Unterschied beispielsweise zu der Ausführungsform der Fig. 2a und 2b besteht darin, dass die Indexöffnung 8 im Fall der Ausführungsform gemäß der Fig. 3a nicht als Indexbohrung ausgeführt ist, sondern als eine Indexausfräsung im Randbereich des dortigen scheibenförmigen Exzenter-Verschlusselements 9.

Auch bei der dritten bevorzugten Ausführungsform der Erfindung ist das Exzenter-Verschlusselement 9 so angeordnet, dass es in seiner Exzenterwirkung in Umfangsrichtung des Verbindungselements bzw. der entsprechenden Klemmmanschette wirkt.

Die Fig. 3b zeigt eine schematische perspektivische Ansicht eines Verbindungselements einer Granuliervorrichtung gemäß der dritten bevorzugten Ausführungsform der Erfindung in der Öffnungs-Position.

Auch die Ausführungsform gemäß der Fig. 3a und 3b erlaubt eine Einhandbedienung durch eine einzelne Bedienperson.

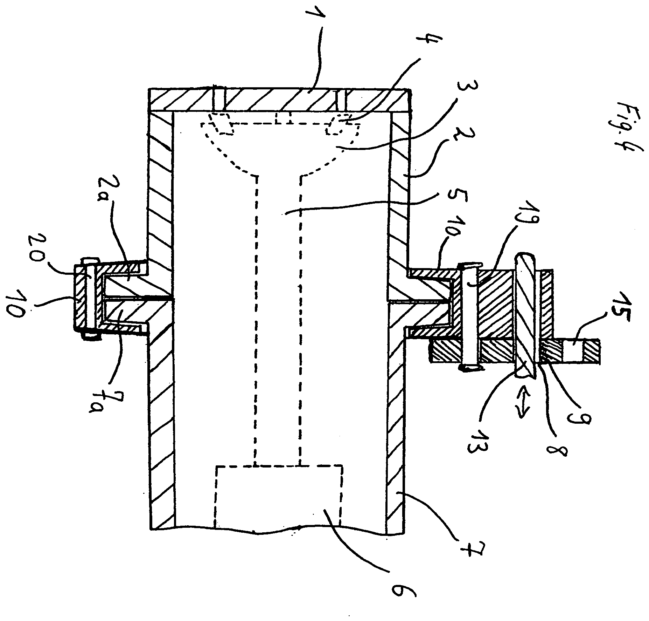

Die Fig. 4 zeigt eine schematische Schnittansicht eines Teils einer Granuliervorrichtung mit einem Verbindungselement gemäß der Erfindung in der Verschluss-Position.

Die in Fig. 4 gezeigte Granuliervorrichtung dient zum Herstellen von Granulatkömem aus einem Kunststoffmaterial und weist eine Düsenplatte 1 auf mit einem an die Düsenplatte 1 angrenzenden Schneidkammergehäuse 2. Eine Schneideinrichtung 3 mit zumindest einem Messer 4, angetrieben über eine Messerwelle 5 von einer Messerantriebseinrichtung 6, angeordnet in einem Messerantriebsgehäuse 7, ist ebenfalls vorgesehen. Das Schneidkammergehäuse 2 weist einen Schneidkammergehäuse-Flanschabschnitt 2a auf, und das Messerantriebsgehäuse 7 weist einen Messerantriebsgehäuse-Flanschabschnitt 7a auf. Die jeweiligen Flanschabschnitte sind dabei im Querschnitt etwas konisch, was es ermöglicht, dass die in ihrer Kontur entsprechend gestaltete Klemmmanschette mit der in Fig. 4 zu sehenden ersten Schellenhälfte 10 (die anderen Elemente der Klemmmanschette sind in der Fig. 4 nicht zu sehen) im dortigen Flanschbereich die beiden Gehäusehälften klemmend in der Verschluss-Position des Exzenter-Verschlusselements 9 verbinden kann. Wie in Fig. 4 gut zu sehen, ist in der dort gezeigten Verschluss-Position der Passnocken 13 mit der Indexöffnung 8 fluchtend angeordnet und tritt dort durch die Indexöffnung 8 hindurch. Durch die (in Fig. 4 nicht gezeigte) Passnockenbetätigungsvorrichtung 22 ist der Passnocken 13 axial verschiebbar, wie dies durch den Doppelpfeil in Fig. 4 angedeutet ist.

Wie aus Fig. 4 gut ersichtlich ist, ist das erfindungsgemäße Exzenter-Verschlusselement 9 so angeordnet, dass es in der Ebene bzw. parallel zur Ebene der Flanschabschnitte 2a, 7a dazwischen angeordnet und bewegbar ist.

Erfindungsgemäß ist eine einfache, reproduzierbare und exakte Verbindung des Schneidkammergehäuses und des Messerantriebsgehäuses einer Granuliervorrichtung möglich, wobei diese in Einhandbedienung durch eine einzelne Bedienperson erfolgen kann. Gleichzeitig wird ein mögliches Verletzungsrisiko durch eine laufende Messerantriebseinrichtung vermieden, da deren Betrieb in einer Öffnungs-Position nicht freigegeben ist. Die Indexöffnung 8 mit dem zusammenwirkenden Passnocken 13 bietet so erfindungsgemäß einen sicheren Betrieb der so gestalteten Granuliervorrichtung.

## Patentansprüche

1. Granuliervorrichtung zum Herstellen von Granulatkömem aus einem Kunststoffmaterial mit einer Düsenplatte (1), einem an die Düsenplatte (1) angrenzenden Schneidkammergehäuse (2), einer Schneideinrichtung (3) mit zumindest einem Messer (4), angetrieben über eine Messerwelle (5) von einer Messerantriebseinrichtung (6), angeordnet in einem Messerantriebsgehäuse (7), wobei das Schneidkammergehäuse (2) einen Schneidkammergehäuse-Flanschabschnitt (2a) und das Messerantriebsgehäuse (7) einen Messerantriebsgehäuse-Flanschabschnitt (7a) aufweisen und dort über ein Verbindungselement miteinander verbindbar sind,
wobei das Verbindungselement eine Klemmmanschette (10, 11, 12) aufweist, die so angeordnet ist, dass diese zumindest einen Abschnitt der Flanschabschnitte (2a, 7a) umschließt, dadurch gegenzeichnet, dass das Verbindungselement weiterhin ein Exzenter-Verschlusselement (9) aufweist, wobei das Exzenter-Verschlusselement (9) mit jeweiligen Abschnitten der Klemmmanschette (10, 11, 12) verbunden ist, und wobei das Exzenter-Verschlusselement (9) zumindest eine Indexöffnung (8) aufweist, welche in einer Verschluss-Position mit einem Passnocken (13) fluchtend angeordnet ist, welcher dort durch die Indexöffnung (8) durchtritt, und dass der Passnocken (13) in der Verschluss-Position über einen Abgriff den Betrieb der Messerantriebseinrichtung (6) freigibt.

2. Vorrichtung nach Anspruch 1, **dadurch gekennzeichnet, dass**. der Passnocken (13) in axialer Richtung verschiebbar ist zwischen einer Öffnungs-Position und der Verschluss-Position, in welcher er durch die Indexöffnung (8) durchtritt und so die Verschluss-Position des Exzenter-Verschlusselements (9) fixiert.

3. Vorrichtung nach Anspruch 1 oder 2, **dadurch gekennzeichnet, dass** der Passnocken (13) von Hand verschiebbar ist.

4. Vorrichtung nach einem der Ansprüche 1 bis 3, **dadurch gekennzeichnet, dass** der Passnocken (13) mittels einer Passnocken-Betätigungsvorrichtung (22) verschiebbar ist, wobei die Passnocken-Betätigungsvorrichtung (22) bevorzugt pneumatisch, hydraulisch oder elektrisch betreibbar ist .

5. Vorrichtung nach einem der Ansprüche 1 bis 4, **dadurch gekennzeichnet, dass** das Exzenter-Verschlusselement (9) als Kniehebel ausgebildet ist.

6. Vorrichtung nach einem der Ansprüche 1 bis 4, **dadurch gekennzeichnet, dass** das Exzenter-Verschlusselement (9) scheibenförmig ausgebildet ist und einen daran angebrachten Bedienhebel (14) aufweist, wobei in dem scheibenförmigen Exzenter-Verschlusselement (9) zumindest eine Exzenter-Kurve (15, 16) vorgesehen ist, in welcher zumindest ein an einem Abschnitt der Klemmmanschette (10, 11, 12) angebrachter Führungsnocken (17, 18) geführt ist, welcher dort auch die Verbindung zwischen dem entsprechenden Abschnitt der Klemmmanschette (10, 11, 12) und dem Exzenter-Verschlusselement (9) bildet.

7. Vorrichtung nach Anspruch 6, **dadurch gekennzeichnet, dass** in der zumindest einen Exzenter-Kurve (15, 16) ein an einem ersten Abschnitt der Klemmmanschette (10, 11, 12) angebrachter erster Führungsnocken (17) geführt ist, welcher dort auch die Verbindung zwischen dem entsprechenden ersten Abschnitt der Klemmmanschette (10, 11, 12) und dem Exzenter-Verschlusselement (9) bildet, und dass ein an einem zweiten Abschnitt der Klemmmanschette (10, 11, 12) und an dem Exzenter-Verschlusselement (9) angebrachter Drehbolzen (19) eine Drehverbindung zwischen dem entsprechenden zweiten Abschnitt der Klemmmanschette (10, 11, 12) und dem Exzenter-Verschlusselement (9) bildet.

8. Vorrichtung nach Anspruch 6, **dadurch gekennzeichnet, dass** eine erste Exzenter-Kurve (15) vorgesehen ist, in welcher ein an einem ersten Abschnitt der Klemmmanschette (10, 11, 12) angebrachter erster Führungsnocken (17) geführt ist, welcher dort auch die Verbindung zwischen dem entsprechenden ersten Abschnitt der Klemmmanschette (10, 11, 12) und dem Exzenter-Verschlusselement (9) bildet, und dass eine zweite Exzenter-Kurve (16) vorgesehen ist, in welcher ein an einem zweiten Abschnitt der Klemmmanschette (10, 11, 12) angebrachter zweiter Führungsnocken (18) geführt ist, welcher dort auch die Verbindung zwischen dem entsprechenden zweiten Abschnitt der Klemmmanschette (10, 11, 12) und dem Exzenter-Verschlusselement (9) bildet.

9. Vorrichtung nach einem der Ansprüche 1 bis 8, **dadurch gekennzeichnet, dass** die Klemmmanschette (10, 11, 12) eine erste Schellenhälfte (10), eine zweite Schellenhälfte (11) und eine Schellenverbindung (12) aufweist, an welcher die erste Schellenhälfte (10) und die zweite Schellenhälfte (11) über Schellendrehbolzen (20, 21) jeweils drehbar angebracht sind.

10. Vorrichtung nach einem der Ansprüche 1 bis 9, **dadurch gekennzeichnet, dass** die Klemmmanschette (10, 11, 12) eine an der ersten Schellenhälfte (10) mittels eines Befestigungsbolzens (23) schwenkbar angebrachte erste Spannbacke (24) und eine an der zweiten Schellenhälfte (11) mittels eines Befestigungsbolzens (23) schwenkbar angebrachte zweite Spannbacke (25) aufweist.

## Claims

1. Granulating device for producing granules from a plastic material, having a nozzle plate (1), a cutting chamber housing (2) contiguous with the nozzle plate (1), a cutting device (3) with at least one blade (4), propelled via a blade shaft (5) by a blade propulsion unit (6), arranged in a blade propulsion housing (7), wherein the cutting chamber housing (2) and the blade propulsion housing (7) have a cutting chamber housing flange section (2a) and a blade propulsion housing flange section (7a), respectively, and can be connected with one another there via a connecting element,
wherein
the connecting element has a clamping collar (10, 11, 12), which is arranged in such a way that it surrounds at least one part of the flange sections (2a, 7a), **characterised in that** the connecting element further has an eccentric locking element (9), wherein the eccentric locking element (9) is connected with the respective parts of the clamping collar (10, 11, 12), and wherein the eccentric locking element (9) has at least one index opening (8), which in a locked position is arranged flush with a locating cam (13), which passes through the index opening (8) there, and **in that** in the locked position the locating cam (13) enables operation of the blade propulsion unit (6) via a pick-off.

2. Device according to claim 1, **characterised in that** the locating cam (13) can be displaced in the axial direction between an open position and the locked position, in which it passes through the index opening (8) and thereby fixes the locked position of the eccentric locking element (9).

3. Device according to claim 1 or 2, **characterised in that** the locating cam (13) can be displaced by hand.

4. Device according to one of claims 1 to 3, **characterised in that** the locating cam (13) can be displaced by means of a locating cam actuator (22), wherein the locating cam actuator (22) can preferably be operated pneumatically, hydraulically or electrically.

5. Device according to one of claims 1 to 4, **characterised in that** the eccentric locking element (9) is configured as a toggle lever.

6. Device according to one of claims 1 to 4, **characterised in that** the eccentric locking element (9) is configured so as to be disc-shaped and has a control lever (14) attached thereto, wherein in the disc-shaped eccentric locking element (9) at least one eccentric curve (15, 16) is provided, in which at least one lead cam (17, 18) attached to one section of the clamping collar (10, 11, 12) is guided, which at least one lead cam (17, 18) also forms the connection there between the corresponding section of the clamping collar (10, 11, 12) and the eccentric locking element (9).

7. Device according to claim 6, **characterised in that** a first lead cam (17) attached to a first section of the clamping collar (10, 11, 12) is guided in the at least one eccentric curve (15, 16), which first lead cam (17) also forms the connection there between the corresponding first section of the clamping collar (10, 11, 12) and the eccentric locking element (9), and **in that** a pivot pin (19) attached to a second section of the clamping collar (10, 11, 12) and to the eccentric locking element (9) forms a rotary joint between the corresponding second section of the clamping collar (10, 11, 12) and the eccentric locking element (9).

8. Device according to claim 6, **characterised in that** a first eccentric curve (15) is provided, in which a first lead cam (17) attached to a first section of the clamping collar (10, 11, 12) is guided, which first lead cam (17) also forms the connection there between the corresponding first section of the clamping collar (10, 11, 12) and the eccentric locking element (9), and **in that** a second eccentric curve (16) is provided, in which a second lead cam (18) attached to a second section of the clamping collar (10, 11, 12) is guided, which second lead cam (18) also forms the connection there between the corresponding second section of the clamping collar (10, 11, 12) and the eccentric locking element (9).

9. Device according to one of claims 1 to 8, **characterised in that** the clamping collar (10, 11, 12) has a first clamp half (10), a second clamp half (11) and a clamp connection (12), on which clamp connection (12) the first clamp half (10) and the second clamp half (11) are each rotatably arranged by means of clamp pivot pins (20, 21).

10. Device according to one of claims 1 to 9, **characterised in that** the clamping collar (10, 11, 12) has a first clamping jaw (24) attached to the first clamp half (10) by means of a fastening screw (23) so as to be pivotable, and a second clamping jaw (25) attached to the second clamp half (11) by means of a fastening screw (23) so as to be pivotable.

## Revendications

1. Dispositif de granulation pour la production de granulats à partir d'un matériau plastique composé d'une filière (1), d'un boîtier de chambre de coupe (2) touchant à la filière (1), d'un dispositif de coupe (3) comprenant au moins un couteau (4) actionné via un arbre de coupe (5) par un dispositif de commande de couteaux (6) placé dans un boîtier de commande de couteaux (7), ledit boîtier de chambre de coupe (2) et ledit boîtier de commande de couteaux (7) présentant chacun une section de bride (2a, 7a) au niveau de laquelle ils peuvent être raccordés l'un à l'autre par un élément de raccord,
et
l'élément de raccord étant constitué d'un collier de serrage (10, 11, 12) placé de manière à entourer au moins une partie des sections de bride (2a, 7a) et **caractérisé par** un élément de fermeture excentrique (9), ledit élément de fermeture excentrique (9) étant raccordé aux parties correspondantes (10, 11, 12) du collier de serrage et présentant au moins une ouverture d'indice (8) alignée avec une came (13) en position de fermeture, ladite came passant alors à travers l'ouverture d'indice (8) et déclenchant au moyen d'un capteur le fonctionnement du dispositif de commande de couteaux (6).

2. Dispositif conforme à la revendication 1 **caractérisé par** la possibilité de déplacer la came (13) dans le sens axial entre une position d'ouverture et la position de fermeture dans laquelle elle passe à travers l'ouverture d'indice (8) et fixe ainsi la position fermée de l'élément de fermeture excentrique (9).

3. Dispositif conforme à la revendication 1 ou 2 **caractérisé par** la possibilité de déplacer manuellement la came (13).

4. Dispositif conforme à l'une des revendications 1 à 3 **caractérisé en ce que** la came (13) peut être déplacée au moyen d'un dispositif d'actionnement (22) correspondant, ce dernier (22) étant de préférence à commande pneumatique, hydraulique ou électrique.

5. Dispositif conforme à l'une des revendications 1 à 4 **caractérisé en ce que** l'élément de fermeture excentrique (9) a la forme d'une genouillère.

6. Dispositif conforme à l'une des revendications 1 à 4 **caractérisé par** la forme de disque de l'élément de fermeture excentrique (9) et par un levier de commande (14) qui y est fixé, l'élément de fermeture excentrique en forme de disque (9) comprenant au moins une came excentrée (15, 16) dans laquelle est passée au moins une came de guidage (17, 18) fixée à une partie du collier de serrage (10, 11, 12) qui permet la liaison entre la partie correspondante du collier de serrage (10, 11, 12) et l'élément de fermeture excentrique (9).

7. Dispositif conforme à la revendication 6 **caractérisé par** une première came de guidage (17) fixée à une première partie du collier de serrage (10, 11, 12) et passée dans la ou les cames excentrées (15, 16) où elle permet la liaison entre ladite première partie du collier de serrage (10, 11, 12) et l'élément de fermeture excentrique (9) et par un boulon tournant (19) fixé à une deuxième partie du collier de serrage (10, 11, 12) et à l'élément de fermeture excentrique (9) qui permet une liaison rotative entre les deux.

8. Dispositif conforme à la revendication 6 **caractérisé par** une première came excentrée (15) dans laquelle une première came de guidage (17) fixée à une première partie du collier de serrage (10, 11, 12) est passée et permet la liaison entre ladite première partie du collier de serrage (10, 11, 12) et l'élément de fermeture excentrique (9) et par une deuxième came excentrée (16) dans laquelle une deuxième came de guidage (18) fixée à une deuxième partie du collier de serrage (10, 11, 12) est passée et permet également la liaison entre ladite deuxième partie du collier de serrage (10, 11, 12) et l'élément de fermeture excentrique (9).

9. Dispositif conforme à l'une des revendications 1 à 8 **caractérisé par le fait que** le collier de serrage (10, 11, 12) présente une première moitié (10), une deuxième moitié (11) et un raccord (12) auquel la première moitié (10) et la deuxième moitié (11) sont fixées de manière pivotante au moyen de boulons tournants (20, 21).

10. Dispositif conforme à l'une des revendications 1 à 9 **caractérisé par le fait que** le collier de serrage (10, 11, 12) présente une première mâchoire de serrage (24) fixée de manière pivotante à sa première moitié (10) par un boulon de fixation (23) et une deuxième mâchoire de serrage (25) fixée de manière pivotante à sa deuxième moitié (11) par un boulon de fixation (23).
